# EUROPÄISCHE PATENTANMELDUNG

(11) **EP 3 995 350 A1**
(43) Veröffentlichungstag der Anmeldung: **11.05.2022**
(21) Anmeldenummer: 21020420.2
(22) Anmeldetag: 20.08.2021
(51) Int. Cl.: B60L 50/50, B60L 50/64

(54) **VERFAHREN UND SYSTEM ZU EINER SCHÜTZANSTEUERUNG IM TRAKTIONSSYSTEM**

(30) Priorität: 05.11.2020 DE 102020129129
(71) Anmelder: Dr. Ing. h.c. F. Porsche AG, 70435 Stuttgart (DE)
(72) Erfinder: Simon, Daniel, 71638 Ludwigsburg (DE); Dibos, Hermann Helmut, 75196 Remchingen (DE); Specht, Eduard, 76646 Bruchsal (DE)

(57) **Zusammenfassung**

Die Erfindung betrifft ein Verfahren zu einem Ansteuern von Schützen in einem Traktionssystem, bei welchem das Traktionssystem eine Wechselstrombatterie, einen Elektromotor, mindestens eine Peripherieeinheit, eine Mehrzahl an Spannungs- und Stromsensoren, eine Mehrzahl an Schützen, welche in elektrischen Verbindungen zu der Wechselstrombatterie und zu dem Elektromotor und zu der mindestens einen Peripherieeinheit angeordnet sind, und eine Steuerung mit einer Hardware-programmierbaren Prozessoreinheit, auf weicher ein Steuerprogramm zum Ansteuern der Schütze bei Betriebsbeginn konfiguriert wird und nach der Konfiguration eine das Ansteuern der Schütze betreffende feste Halbleiter-Schaltungsstruktur der Prozessoreinheit vorliegt, umfasst, wobei das Traktionssystem mehrere Betriebsmodi aufweist, wobei ein jeweiliger Betriebsmodus durch eine Fahrzeuggesamtsteuerung vorgegeben wird, wobei ein jeweiliger Betriebsmodus eine Mehrzahl an Zuständen aufweist, welche durch mindestens einen jeweiligen Zielzustand und mindestens einen Zwischenzustand gebildet wird, wobei ein jeweiliger Zustand vom Traktionssystem mittels eines jeweiligen Befehles durch einen jeweiligen Übergang zwischen den jeweiligen Zuständen eingenommen werden, wobei dem Traktionssystem zu dem jeweiligen Zustand eine jeweilige Schaltstellung der Schütze in einer Schalttabelle zugewiesen wird, wobei zu einem jeweiligen Schütz eine Schließzeitdauer und eine Öffnungszeitdauer in einer Schaltzeitentabelle abgelegt werden, wobei der jeweilige Zustand durch einen fest von einem Zustandsautomaten vorgegebenen Ablauf erreicht wird, wobei der Zustandsautomat durch das Steuerprogramm realisiert wird, und wobei die Schütze durch das Steuerprogramm gemäß der Schalttabelle mit Hilfe der Schaltzeitentabelle gesteuert werden. Ferner wird ein System, auf dem das Verfahren ausgeführt wird, vorgestellt

## Beschreibung

Die vorliegende Erfindung betrifft ein Verfahren zu einem Ansteuern von Schützen in einem Traktionssystem. Ferner wird ein System, auf dem das Verfahren ausgeführt wird, vorgestellt.

In Elektrofahrzeugen werden im Traktionssystem Wechselstrombatterien eingesetzt, wobei durch fortlaufend wechselnde Verschaltung von Gleichspannungsquellen eine oder mehrere Phasen zur Wechselstromversorgung eines Elektromotors erzeugt werden. Innerhalb des Traktionssystems sind zu einer Unterbrechung bzw. Schließung von elektrischen Verbindungen zwischen verschiedenen Komponenten von einer Steuerung kontrollierte Schütze angeordnet.

Die Druckschrift US 2018/0043783 A1 offenbart ein Fahrzeugsystem, welches eine Steuerung, ein Relais und eine Spule eines Schützes umfasst. Das Relais ist so konfiguriert, dass es im geschlossenen Zustand Strom zwischen einer Traktionsbatterie und einer elektrischen Last überträgt. Die Steuerung betreibt einen Schalter dergestalt, dass durch einen Stromfluss aus der Traktionsbatterie durch Spule und Schalter, wobei das Relais umgangen wird, bewirkt wird, dass das Relais schließt, und ein Vorladen der Last stattfinden kann.

In der Druckschrift US 2017/005371A1 werden Systeme und Verfahren zum Speichern von Energie zur Nutzung durch ein Elektrofahrzeug beschrieben. Die Systeme umfassen Batteriestränge, welche unabhängig voneinander über einen jeweiligen steuerbaren Schalter mit einer Fahrzeugenergieversorgung verbunden werden können.

Die US-amerikanischen Druckschrift US 2018/0072179 A1 offenbart ein Hochspannungsverriegelungssystem, welches ein erstes Modul mit einem Schütz und einer Nebenschlussverbindung sowie ein zweites Modul mit ersten und zweiten Schaltkreisen, die über erste und zweite Leitungen mit dem ersten Modul verbunden sind, umfasst. Das zweite Modul sperrt als Reaktion darauf, dass eine Impedanz des Nebenschlusses einen Schwellwert überschreitet, ein Signal zum Schalten des Schützes.

Während eines Betriebes des Elektrofahrzeuges können verschiedene Betriebszustände des Traktionssystems gewünscht sein, die eine unterschiedliche Verschaltung von Wechselstrombatterie, Elektromotor und einer Anschluss-Peripherie bedingen. So ist je nachdem ob bspw. eine Aufladung an einer Ladesäule oder eine Entladung der Wechselstrombatterie zur Traktion stattfindet, die Verbindung zwischen Wechselstrombatterie und Elektromotor durch Schütze getrennt oder geschlossen.

Aus einer jeweiligen Hardware-Verschaltung von Komponenten des Traktionssystems, Gefahren- und Risikoanalysen und funktionalen Sicherheitsvorschriften ergeben sich für einen jeweiligen Betriebszustand Anforderungen an die Ansteuerung der Schütze, welche je nach Type bspw. unterschiedliche Normalstellungen (offen oder geschlossen) und unterschiedliche Schaltzeiten aufweisen können.

Vor diesem Hintergrund ist es eine Aufgabe der vorliegenden Erfindung, ein Verfahren zu einem Ansteuern von Schützen in einem Traktionssystem. vorzustellen, bei dem zu verschiedenen Betriebszuständen des Traktionssystems eine jeweilige durch die Schütze herbeigeführte Verschaltung von Komponenten des Traktionssystem bewirkt wird. Dabei soll aus sicherheitsrelevanten Überlegungen heraus eine Hardware-Lösung gefunden werden. Ferner soll ein System, auf dem das Verfahren ausgeführt wird, vorgestellt werden.

Zur Lösung der voranstehend genannten Aufgabe wird ein Verfahren zu einem Ansteuern von Schützen in einem Traktionssystem vorgeschlagen, bei welchem das Traktionssystem eine Wechselstrombatterie, einen Elektromotor, mindestens eine Peripherieeinheit, eine Mehrzahl an Spannungs- und Stromsensoren, eine Mehrzahl an Schützen, welche in elektrischen Verbindungen zu der Wechselstrombatterie und zu dem Elektromotor und zu der mindestens einen Peripherieeinheit angeordnet sind, und eine Steuerung mit einer Hardware-programmierbaren Prozessoreinheit, auf welcher ein Steuerprogramm zum Ansteuern der Schütze bei Betriebsbeginn konfiguriert wird und nach der Konfiguration eine das Ansteuern der Schütze betreffende feste Halbleiter-Schaltungsstruktur der Prozessoreinheit vorliegt, umfasst. Das Traktionssystem weist mehrere Betriebsmodi auf, wobei ein jeweiliger Betriebsmodus durch eine Fahrzeuggesamtsteuerung vorgegeben wird. Ein jeweiliger Betriebsmodus weist eine Mehrzahl an Zuständen auf, welche durch mindestens einen jeweiligen Zielzustand und mindestens einen Zwischenzustand gebildet wird, wobei ein jeweiliger Zustand vom Traktionssystem mittels eines jeweiligen Befehles durch einen jeweiligen Übergang zwischen den jeweiligen Zuständen eingenommen werden. Dem Traktionssystem wird zu dem jeweiligen Zustand eine jeweilige Schaltstellung der Schütze in einer Schalttabelle zugewiesen. Zu einem jeweiligen Schütz werden eine Schließzeitdauer und eine Öffnungszeitdauer in einer Schaltzeitentabelle abgelegt. Der jeweilige Zustand wird durch einen fest von einem Zustandsautomaten vorgegebenen Ablauf erreicht, wobei der Zustandsautomat durch das Steuerprogramm realisiert wird, und wobei die Schütze durch das Steuerprogramm gemäß der Schalttabelle mit Hilfe der Schaltzeitentabelle gesteuert werden.

Ein solcher Hardware-programmierbarer Prozessor ist vorteilhaft vollständig testbar, so dass falsche Ansteuerungen durch Testreihen im Vorfeld ausgeschlossen werden können. Zusätzlich können sowohl zeitlich definierte Abläufe als auch in ihrer Abfolge definierte Abläufe sichergestellt werden. z.B. beim Eintritt in einen sicheren Zustand. Mit dessen Hilfe weist das erfindungsgemäße Verfahren zu jedem Zeitpunkt die jeweiligen Schützschaltzustände, d. h. offen oder geschlossen, sicher einem jeweiligen Zustand des Traktionssystems zu und erfüllt damit alle Sicherheitsanforderungen an ein gesteuertes Traktionssystem durch Gefahren- und Risikoanalysen sowie der funktionalen Sicherheit.

Die Schließzeitdauer und die Öffnungszeitdauer eines jeweiligen Schützes werden bspw. aus Datenblättern mit Spezifikationen zu dem Typ des jeweiligen Schützes übernommen. In dem Traktionssystem können bspw. unterschiedliche Typen von Schützen verbaut sein (siehe Tab. 2), die zu Betriebsbeginn, also mit zuvor stromlosen Zustand, entweder normal-geschlossen, englisch normally closed bzw. NC, oder normal-offen, englisch normally open bzw. NO, geschaltet sind. So sind sogenannte AKS-Schütze, welche zu einem aktiven Kurzschluss des Elektromotors eingesetzt werden, als NC ausgelegt, während ein jeweiliger Motorphasen-Schütz, der einer jeweiligen Phasenspannung der Wechselstrombatterie zugeordnet ist, NO ausgelegt ist. Nun muss aus schaltungstechnischen Gründen (zur Vermeidung schadhafter Strom- bzw. Spannungspulse) ein AKS-Schütz zuerst geöffnet werden, bevor ein jeweiliger Motorphasen-Schütz schließt. Ein Öffnungs- bzw. ein Schließvorgang ist jedoch mit einer jeweiligen Zeitdauer verbunden, die auch noch je nach Fabrikat des Schützes variiert. Erfindungsgemäß sind jedoch vorteilhaft diese jeweiligen Öffnungszeitdauern und Schließzeitdauern in der Schaltzeitentabelle (siehe Tab. 3) abgelegt und werden von dem Steuerprogramm zum Ansteuern der Schütze umgesetzt.

Als Beispiel für einen Zwischenzustand ist ein Sensorcheck bzw. Selbsttest eines Stromsensor zu nennen, damit sichergestellt ist, dass bspw. eine von diesem Stromsensor abhängige Überstromschaltung funktioniert.

In einer Analyse zur Funktionssicherheit wurde insbesondere für die Ansteuerung der Mehrzahl an Schützen identifiziert, dass die Ansteuerung zeitlich und vom jeweiligen Zustand der Mehrzahl an Schützen abhängig koordiniert werden muss. Hierzu ist eine programmtechnische Hardware-Umsetzung gemäß dem erfindungsgemäßen Verfahren vorteilhaft, da Anpassungen im Zustandsautomaten oder der Schalttabelle an ein programmtechnisch gesteuertes Fahrzeuggesamtsystem und/oder eine programmtechnisch gesteuerte Wechselstrombatterie, etwa einem modularen Multilevelkonverter mit serieller und paralleler Konnektivität, bspw. beschrieben in "Goetz, S.M.; Peterchev, A.V.; Weyh, T., "Modular Multilevel Converter With Series and Parallel Module Connectivity: Topology and Control," Power Electronics, IEEE Transactions on , vol.30, no.1, pp.203,215, 2015. doi: 10.1109/TPEL.2014.2310225, einfach, unkompliziert und rein programmtechnisch vorgenommen werden können.

In einer Ausführungsform des erfindungsgemäßen Verfahrens werden die Betriebsmodi mit jeweiligem Zielzustand mindestens aus folgender Liste gewählt: Betriebsmodus "POWER_UP_DOWN" mit Zielzustand "Idle" nach vorherigem Zwischenzustand "Power-Sensorcheck", Betriebsmodus "MOTOR" mit Zielzustand "Motor" nach vorherigem "Motor-Sensorcheck", Betriebsmodus "DC_LADEN" mit Zielzustand "DC-Laden" nach vorherigem "DC-Strom-Sensorcheck", Betriebsmodus "AC_LADEN" mit Zielzustand "AC-Laden" nach vorherigem "AC-Strom-Sensorcheck", Betriebsmodus "ERROR" mit Zielzustand "Init" nach vorherigem Zwischenzustand "Idle-Error", Betriebsmodus "SHUTDOWN" mit Zielzustand "Off" nach vorherigem Zwischenzustand "PowerDown".

In einer weiteren Ausführungsform des erfindungsgemäßen Verfahrens wird die mindestens eine Peripherieeinheit aus folgender Liste gewählt: Isolationswächter, Niedervoltgleichspannungswandler, Ladestecker, CAN-Bus.

In einer noch weiteren Ausführungsform des erfindungsgemäßen Verfahrens wird als Prozessoreinheit ein FPGA gewählt. Das FPGA steht als Abkürzung für ein "Field Programmable Gate Array", zu Deutsch "betriebsbezogen programmierbare Gatter-Anordnung". Auf einem FPGA ist bspw. zu einem Start des die erfindungsgemäße Schützansteuerung aufweisenden Elektrofahrzeuges eine jeweilige Prozessor-Programmierung konfigurierbar, welche als Hardware-Umsetzung gilt und entsprechend sicher ausführbar ist. Der Zustandsautomat wird durch das Steuerprogramm mit Hilfe eines VHDL-Moduls auf dem FPGA als Hardware-Programm realisiert. VHDL steht für "Very High Speed Integrated Circuit Hardware Description Language", auch "VHSIC Hardware Description Language", und wurde entwickelt, um, implementiert auf einem Hardware-programmierbaren Prozessor, als Zustandsautomat beschriebene Systemabläufe entsprechend einer Hardware-Steuerung auszuführen.

In einer fortgesetzt weiteren Ausführungsform des erfindungsgemäßen Verfahrens umfasst die Hardware-programmierbare Prozessoreinheit mindestens einen zusätzlichen Mikroprozessorkern, auf dem ein Meta-Zustandsautomat, der dem Zustandsautomaten, welcher durch das Hardware-programmierte Steuerprogramm realisiert ist übergeordnet ist, als ein Software-Programm ausgeführt wird. Der durch das Software-Programm realisierte Meta-Zustandsautomat wechselt zwischen den voranstehend angeführten Zwischenzuständen und Zielständen, während das Hardware-programmierte Steuerprogramm die hierzu notwendigen Steuerungen der Schütze ausführt. Einerseits stellt damit der durch das Hardware-programmierte Steuerprogramm realisierte Zustandsautomat sicher, dass die Konfiguration der Schützansteuerung in sich konsistent ist und dass physikalische Eigenschaften, bspw. Schaltzeiten, berücksichtigt werden. Auf der anderen Seite wird dem Meta-Zustandsautomaten eine jeweilige Information zu einem System-Kontext zur Verfügung gestellt, d. h. er hat Zugriff auf Messwerte von Stromsensoren, erhält Feedback-Signale spezieller hierfür konfigurierter Schütze, überwacht eine jeweilige Versorgungsspannung eines jeweiligen Schützes. Aus diesen jeweiligen Informationen kann der Meta-Zustandsautomat Einfluss nehmen auf die von dem Zustandsautomaten der Schützansteuerung veranlassten Übergänge zwischen Zuständen, in der er bspw. aus den Feedback-Signalen der jeweiligen hierfür konfigurierten Schütze Rückschlüsse auf sich ändernde Schließzeitdauer oder Öffnungszeitdauer zieht und Änderungen in der Schaltzeitentabelle vornimmt. Durch den Meta-Zustandsautomat wird ein Kontext der Schützansteuerung überwacht, d. h. ob es zu Zeitverzögerungen oder Zeitdauerabweichungen bei den jeweiligen Übergängen kommt. Daraus kann bspw. auf das Vorliegen eines Schützklebers geschlossen werden. Bei Vorliegen eines Fehlers kann der Meta-Zustandsautomat jederzeit und unabhängig vom aktuell eingenommen Zustand in einen Error-Zustand wechseln. Die hierbei zu erfolgende Schützansteuerung wird dann wieder vom Hardware-programmierten Steuerprogramm übernommen, ganz ohne weitere Aktivität des Software-basierten Meta-Zustandsautomaten, so dass in jedem Fall sichergestellt ist, dass die hierzu in der Schalttabelle vorgesehenen Schütze angesteuert werden.

In einer fortgesetzt noch weiteren Ausführungsform des erfindungsgemäßen Verfahrens wird das Steuerprogramm zum Ansteuern der Schütze zu Betriebsbeginn durch einen Programmlader auf der Hardware-programmierbaren Prozessoreinheit konfiguriert. Der die Hardware-programmierbaren Prozessoreinheit jeweilig neu beim Betriebsstart mit dem Steuerprogramm versorgende Programmlader kann bspw. ein First Stage Boot Loader, abgekürzt als FSBL und deutsch "Erststufen-Startprogramm-Lader" sein.

Ferner wird ein System zu einem Ansteuern von Schützen in einem Traktionssystem beansprucht, bei welchem das Traktionssystem eine Wechselstrombatterie, einen Elektromotor, mindestens eine Peripherieeinheit, eine Mehrzahl an Spannungs- und Stromsensoren, eine Mehrzahl an Schützen, welche in elektrischen Verbindungen zu der Wechselstrombatterie und zu dem Elektromotor und zu der mindestens einen Peripherieeinheit angeordnet sind, und eine Steuerung mit einer Hardware-programmierbaren Prozessoreinheit umfasst. Die Hardware-programmierbare Prozessoreinheit ist dazu ausgestaltet, ein Steuerprogramm zum Ansteuern der Schütze bei Betriebsbeginn zu konfigurieren, wodurch nach der Konfiguration eine das Ansteuern der Schütze betreffende feste Schaltungsstruktur der Prozessoreinheit vorliegt. Das Traktionssystem weist mehrere Betriebsmodi auf, wobei ein jeweiliger Betriebsmodus durch eine Fahrzeuggesamtsteuerung vorgegeben ist. Ein jeweiliger Betriebsmodus weist eine Mehrzahl an Zuständen auf, wobei die Mehrzahl an Zuständen durch mindestens einen jeweiligen Zielzustand und mindestens einen Zwischenzustand gebildet ist. Ein jeweiliger Zustand der Mehrzahl an Zuständen ist vom Traktionssystem mittels eines jeweiligen Befehles durch einen jeweiligen Übergang zwischen den jeweiligen Zuständen einnehmbar. Dem Traktionssystem ist zu einem jeweiligen Zustand eine jeweilige Schaltstellung der Schütze in einer Schalttabelle zugewiesen. Zu einem jeweiligen Schütz sind eine Schließzeitdauer und eine Öffnungszeitdauer in einer Schaltzeitentabelle abgelegt. Der jeweilige Zustand ist durch einen fest von einem Zustandsautomaten vorgegebenen Ablauf erreichbar, wobei der Zustandsautomat durch das Steuerprogramm realisiert ist, und wobei die Schütze durch das Steuerprogramm gemäß der Schalttabelle mit Hilfe der Schaltzeitentabelle steuerbar sind.

In einer Ausgestaltung des erfindungsgemäßen Systems sind die Betriebsmodi mit jeweiligem Zielzustand und mindestens einem jeweiligen Zwischenzustand mindestens aus folgender Liste gewählt: Betriebsmodus "POWER_UP_DOWN" mit Zielzustand "Idle" nach vorherigem Zwischenzustand "Power-Sensorcheck", Betriebsmodus "MOTOR" mit Zielzustand "Motor" nach vorherigem "Motor-Sensorcheck", Betriebsmodus "DC_LADEN" mit Zielzustand "DC-Laden" nach vorherigem "DC-Strom-Sensorcheck", Betriebsmodus "AC_LADEN" mit Zielzustand "AC-Laden" nach vorherigem "AC-Strom-Sensorcheck", Betriebsmodus "ERROR" mit Zielzustand "Init" nach vorherigem Zwischenzustand "Idle-Error", Betriebsmodus "SHUTDOWN" mit Zielzustand "Off" nach vorherigem Zwischenzustand "PowerDown" .

In einer weiteren Ausgestaltung des erfindungsgemäßen Systems ist die mindestens eine Peripherieeinheit aus folgender Liste entnommen: Isolationswächter, Niedervoltgleichspannungswandler, Ladestecker, CAN-Bus.

In einer noch weiteren Ausgestaltung des erfindungsgemäßen Systems ist die Prozessoreinheit ein FPGA und der Zustandsautomat durch das Steuerprogramm mit Hilfe eines VHDL-Moduls auf dem FPGA als Hardware realisiert.

In einer fortgesetzt weiteren Ausgestaltung des erfindungsgemäßen Systems umfasst die Hardware-programmierbare Prozessoreinheit mindestens einen zusätzlichen Mikroprozessorkern, auf dem ein dem Zustandsautomaten, der durch das Hardware-programmierte Steuerprogramm realisiert ist, übergeordneter Meta-Zustandsautomat als Software ausführbar ist.

In einer fortgesetzt noch weiteren Ausgestaltung des erfindungsgemäßen Systems umfasst das System zusätzlich einen Programmlader. Der Programmlader ist dazu ausgestaltet, das Steuerprogramm zum Ansteuern der Schütze zu Betriebsbeginn auf der Hardware-programmierbaren Prozessoreinheit zu konfigurieren.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Figur 1 zeigt ein Schaubild eines Zustandsautomaten zur Schützansteuerung in einer Ausführungsform des erfindungsgemäßen Verfahrens.
Figur 2 zeigt ein Schaubild eines Meta-Zustandsautomaten zur Steuerung eines Traktionssystems in einer weiteren Ausführungsform des erfindungsgemäßen Verfahrens.
Figur 3 zeigt ein Blockschaltbild eines Traktionssystems in einer Ausgestaltung des erfindungsgemäßen Systems.

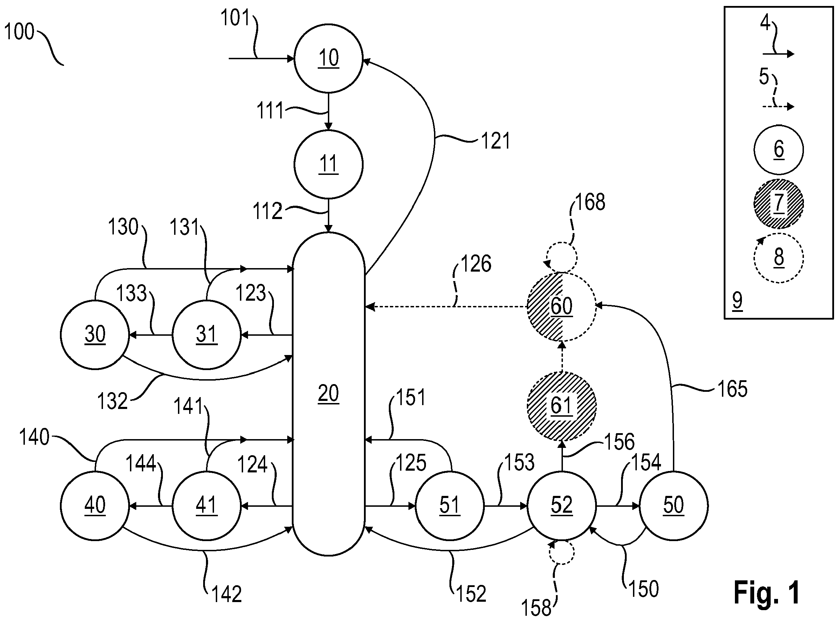

In Figur 1 wird ein Schaubild eines Zustandsautomaten 100 zur Schützansteuerung in einer Ausführungsform des erfindungsgemäßen Verfahrens gezeigt. In einer zugehörigen Legende 9 entspricht ein durchgezogener Pfeil 4 einem Übergang zwischen zwei Zuständen aufgrund eines Befehls des Zustandsautomaten, es entspricht ein gestrichelter Pfeil 5 einem Übergang aufgrund eines Prozessorbefehls, es entspricht ein Kreis 6 einem stabilen Zustand, es entspricht ein schraffierter gestrichelter Kreis 7 einem Übergangszustand, und es entspricht ein gestrichelter Kreis 8 einem blockierten Verzögerungszustand mit selbstgewählter Zeitdauer. Der Zustandsautomat 100 beginnt in einem Betriebsmodus "POWER_UP_DOWN" mit einer Eingangsaktion 101, durch welche ein Zustand "PowerOnReset" 10 eingenommen wird. Durch einen Befehl "PowerUp (or Idle)" 111 wird zu einem Zustand "CSC_{P}" 11 gewechselt, in welchem ein Test eines Stromsensors für die Stromversorgung ausgeführt wird. Anschließend wird mit angeschalteter Stromversorgung durch einen weiteren Befehl "PowerUp (or Idle)" 112 in den Zustand "Idle" 20 gewechselt, aus dem heraus es durch einen Befehl "Powerdown" wieder zurück zu dem Zustand "PowerOnReset" 10 gehen kann. Das Traktionssystem wartet eingeschaltet im Zustand "Idle" 20 auf eine Vorgabe eines Fahrzeuggesamtsystems zum Ausführen eines jeweiligen Betriebsmodus. Bei Vorgabe eines Betriebsmodus "AC_LADEN" wird durch einen Befehl "AC-Laden" 123 zu einem Zustand "CSC_{A}" 31 gewechselt, in welchem ein Test eines Stromsensors für einen Ladevorgang der Wechselstrombatterie mit Wechselstrom ausgeführt wird. Im Fehlerfall wird durch einen Befehl "Error" 131 zum Zustand "Idle" 20 zurückgewechselt, andernfalls wird durch einen Befehl "ACCh" 133 zu einem Zustand "ACCh" 30 gewechselt, in welchem ein Wechselstrom laden der Wechselstrombatterie stattfindet. Nach beendigtem Wechselstromladen wird durch einen Befehl "Idle" 132 wieder zum Zustand "Idle" 20 gewechselt, oder, im Fehlerfalle, durch einen Befehl "Error" 130 zunächst zum Zustand "Idle" gewechselt. Bei Vorgabe eines Betriebsmodus "DC_LADEN" wird durch einen Befehl "DC-Laden" 124 zu einem Zustand "CSC_{D}" 41 gewechselt, in welchem ein Test eines Stromsensors für einen Ladevorgang der Wechselstrombatterie mit Gleichstrom ausgeführt wird. Im Fehlerfall wird durch einen Befehl "Error" 141 zum Zustand "Idle" 20 zurückgewechselt, andernfalls wird durch einen Befehl "DCCh" 144 zu einem Zustand "DCCh" 40 gewechselt, in welchem ein Gleichstromladen der Wechselstrombatterie stattfindet. Nach beendigtem Gleichstromladen wird durch einen Befehl "Idle" 142 wieder zum Zustand "Idle" 20 gewechselt, oder, im Fehlerfalle, durch einen Befehl "Error" 140 zunächst zum Zustand "Idle" 20 gewechselt. Bei Vorgabe eines Betriebsmodus "MOTOR" wird durch einen Befehl "Motor" 125 zu einem Zustand "CSC_{M}" 51 gewechselt, in welchem ein Test zur Motor-Stromsensorik durchgeführt wird. Im Fehlerfall wird durch einen Befehl "Error" 151 zum Zustand "Idle" 20 zurückgewechselt, andernfalls wird durch einen weiteren Befehl "Motor" 153 zu einem weiteren Zwischenzustand "CSC2 Motor" 52 gewechselt, in dem mit einer selbstgewählten Zeitdauer 158 verblieben wird. Sollte ein Fehler vorliegen, so wird durch ein Befehl "Error" 156 in einen Übergangszustand "PErrorT" 61 gewechselt, in dem ein Vorliegen eines Fehlers vorbereitet wird und in einen Zustand "PError" 61 gewechselt wird, der eine Verzögerung mit selbstgewählter Zeitdauer 168 aufweist und schließlich bei Vorliegen eines Prozessorbefehls 126 in den Zustand "Idle" 20 wechselt. Sollte allerdings beim Zustand "CSC2 Motor" 52 kein Fehler vorliegen, so wird mit einem Befehl "Motor" 154 in einen Zustand "Motor" 50 gewechselt, in welchem bspw. eine Fahrtätigkeit ausgeführt werden kann. Nach Beendigung dieses Zustands "Motor" 50 wird durch einen Befehl "Idle" 150 zu dem Zustand "CSC2" Motor" 52 zurückgewechselt, aus dem selbst wieder durch einen weiteren Befehl "Idle" 152 in den Zustand "Idle" 20 gewechselt werden kann. Es kann jedoch auch im Zustand "Motor" 50 ein Fehler auftreten, wonach mit einem Befehl "Error" 165 zu dem Zustand "PError" 60 gewechselt wird.
Der Zustandsautomat 100 wird durch ein Steuerprogramm realisiert. Für einen jeweiligen Zustand 10, 11, 20, 30, 31, 40, 41, 50, 51, 52, 60, 61 ist eine jeweilige Schaltstellung eines jeweiligen Schützes des Traktionssystems durch die Schalttabelle der Tab. 1 gegeben und wird durch das Steuerprogramm angesteuert. Dabei beachtet das Steuerprogramm bei den jeweiligen Befehlen 111, 112, 121, 123, 124, 125, 126, 130, 131, 132, 133, 140, 141, 142, 144, 151, 152, 153, 154, 156, 165 zu Übergängen zwischen den jeweiligen Zuständen 10, 11, 20, 30, 31, 40, 41, 50, 51, 52, 60, 61 welcher Typ Schütz S1, S2, S3, S4, S5, S9, S10, S11, S12, S13, S14 vorliegt (siehe Tab. 2) und welche Schaltzeiten eingehalten werden müssen (siehe Tab. 3).

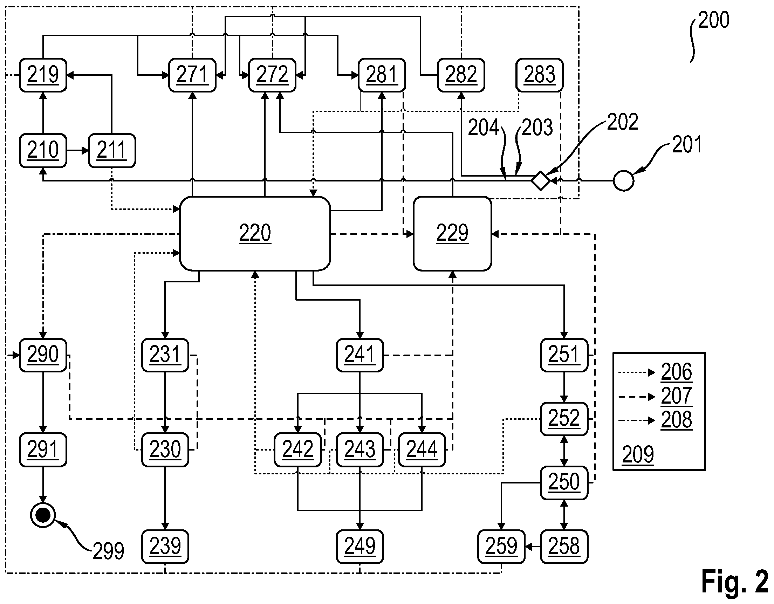

In Figur 2 wird ein Schaubild eines Meta-Zustandsautomaten 200 zur Steuerung eines Traktionssystems in einer weiteren Ausführungsform des erfindungsgemäßen Verfahrens gezeigt. In einer weiteren Legende 209 werden einem gepunkteten Pfeil 206 ein Übergang zu einem Zustand "IDLE" 220, einem gestrichelten Pfeil 207 ein Übergang einem Zustand "IDLE_ERROR" 229, und einem gestrichpunkteten Pfeil 208 ein Übergang zu einem Zustand "PREPARE_SHUTDOWN" 290 zugewiesen. Der Meta-Zustandsautomat 200 weist nach einem Start 201 eine Verzweigung 202 auf, in der über einen Modus zu einem Debuggen eines einzelnen Moduls der Wechselstrombatterie des Traktionssystems entschieden wird. Je nachdem ob eine Variable DBG_CB_TEST_SINGLE_MODULE_IS_ENABLED "wahr" 203 oder "unwahr" 204 ist, wird der jeweilige Zweig durchlaufen. Sollte der "wahr"-Zweig 203 durchlaufen werden, so wird nach einem Zustand "DBG_SINGLE_CB" entweder direkt der Zustand "PREPARE_SHUTDOWN" 290 erreicht, oder indirekt über einen Zustand "UPDATE_CB" 271 und einen Zustand "UPDATE_CC" 272. Sollte der "unwahr"-Zweig 204 durchlaufen werden, so wird zunächst eine Stromversorgung im Zustand "PowerOnReset" 210 aktiviert, worauf entweder ein Zustand "BOOT_ERROR" 219 eingenommen wird, oder es nach Test des Stromsensors im Zustand "CSC_{P}" 211 zum Zustand "IDLE" 220 kommt. Aus dem Zustand "BOOT_ERROR" 219 wird entweder direkt der Zustand "PREPARE_SHUTDOWN" 290 erreicht, oder indirekt über einen Zustand "UPDATE_CB" 271 oder über einen Zustand "UPDATE_CC" 272. Es ist aber auch ein Übergang in einen Zustand "DBG_HSB_CMD" 281 möglich, aus welchem dann der Zustand "IDLE" 220 oder "IDLE_ERROR" 229 erreicht wird. Letztere beide Zustände 220 und 229 werden auch von einem Zustand "DBG_PMSM" erreicht. Aus dem Zustand "IDLE_ERROR" 229 wird allerdings direkt wieder der Zustand "PREPARE_SHUTDOWN" 290 erreicht. Aus dem Zustand "IDLE" 220 können die dem Betriebsmodus für "AC_LADEN" entsprechenden Zustände "CSC_A" 231, "ACCHG" 230 und "ACCHG_ERROR" 239 erreicht werden. Weiter können aus dem Zustand "IDLE" 220 die dem Betriebsmodus für "DC_LADEN" entsprechenden Zustände "CSC_D" 241, "DCCHG_SER" 242, "DCCHG_PAR" 243, "DCCHG_DYN" 244 und "DCCHG_ERROR" 249 erreicht werden. Außerdem können aus dem Zustand "IDLE" 220 die dem Betriebsmodus für "MOTOR" entsprechenden Zustände "CSC_M" 251, "CSC2 MOTOR" 252, "MOTOR_CHECK_STOP" 258 und " MOTOR_ERROR" 259 erreicht werden. Die entsprechenden ERROR-Zustände 239, 249, 259 führen allesamt zum Zustand "PREPARE_SHUTDOWN" 290, welcher zu einem Zustand "SHUTDOWN" 291 und zu einem Ende 299 des Meta-Zustandsautomaten 200 führt.

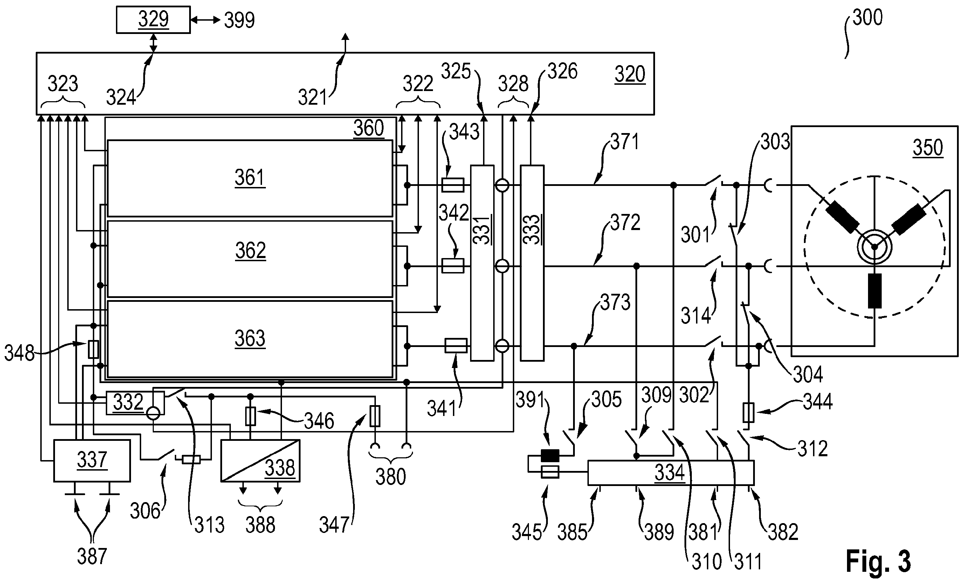

In Figur 3 wird ein Blockschaltbild eines Traktionssystems 300 in einer Ausgestaltung des erfindungsgemäßen Systems gezeigt. Das Traktionssystem 300 umfasst die von einer Ausführungsform des erfindungsgemäßen Verfahrens angesteuerten Schütze S1 301, S2 302, S3 303, S4 304, S5 305, S9 309, S10 310, S11 311, S12 312, S13 313, S14 314. Der ebenfalls vom Traktionssystem 300 umfasste Schütz S6 306 nimmt hier eine Sonderrolle ein, da er lediglich einer Vorladung eines Niedervoltversorgungsgleichspannungswandlers dient und nicht im sicherheitsrelevanten Bezug zu Schaltstellungen der Schütze S1 301, S2 302, S3 303, S4 304, S5 305, S9 309, S10 310, S11 311, S12 312, S13 313, S14 314 steht. Das Traktionssystem 300 umfasst weiter eine Steuerung 320, welche einen Anschluss 321 zu einer Ansteuerung der Schütze S1 301, S2 302, S3 303, S4 304, S5 305, S9 309, S10 310, S11 311, S12 312, S13 313, S14 314, eine Modulsteuerung 322 für einen modularen Multilevelkonverter als Wechselstrombatterie 360, Fehlersignalleitungen 323, Schnittstelle 324 zum CAN-Gateway 329, Signaleingang 325 Phasenstromsensoren 331, Signaleingang 326 aus Phasenspannungssensoren 333, und eine Kontrollstromschleife 328 zu Stromsensoren 331, 332 umfasst. Noch weiter umfasst das Traktionssystem 300 Phasenstromsensoren 331, einen Sternpunkt-Stromsensor 332, Phasenspannungssensoren 333, Spannungssensoren 334, einen Isolationswächter 337 und einenNiedervoltversorgungsgleichspannungswandler 338, sowie diverse Sicherungen F1 341, F2 342, F3 343, F4 344, F5 345, F6 346, F7 347, F8 348. Das Traktionssystem 300 umfasst fortgesetzt einen Elektromotor 350, einen modularen Multilevelkonverter als Wechselstrombatterie 360 mit steuerbaren Modulen in drei Modulsträngen (U-Modulstrang 363, V-Modulstrang 362, W-Modulstrang 361) zu drei Phasen U 373, V 372 und W 271. Schließlich umfasst das Traktionssystem 300 eine externe 48 V-Versorgung 380, für Gleichstromladen einen Anschluss "DC-Laden Minuspol" 381 und einen Anschluss "DC-Laden Pluspol" 382, für AC-Laden einen L1-Leitungsanschluss 385 und eine N-Leitung 389, zudem Fahrzeugmassenanschlüsse 387, einen 12 V-Bordnetzanschluss 388, eine Spule 391 und einen Anschluss des CAN-Gateways 329 zum Fahrzeug-CAN-Bus 399.

**Tabelle 1: Schalttabelle der Schütze**

| Betriebsmodus | Schaltsequenz | S2 | S14 | S1 | S4 | S3 | S5 | S9 | S10 | S11 | S12 | S13 |
|---|---|---|---|---|---|---|---|---|---|---|---|---|
| POWER UP/DOWN | PowerOnReset | 0 | 0 | 0 | 0 | 0 | 0 | 0 | 0 | 0 | 0 | 0 |
| | PowerOnReset->CSC_{P} | 0 | 0 | 0 | 0 | 0 | 0 | 0 | 0 | 0 | 0 | 0 |
| | CSC_{P}->PUP=Idle | 0 | 0 | 0 | 0 | 0 | 0 | 0 | 0 | 0 | 0 | 1 |
| | Idle->PDown | 0 | 0 | 0 | 0 | 0 | 0 | 0 | 0 | 0 | 0 | 0 |
| MOTOR | Idle | 0 | 0 | 0 | 0 | 0 | 0 | 0 | 0 | 0 | 0 | 1 |
| | Idle>CSC_{M} | 0 | 0 | 0 | 0 | 0 | 0 | 0 | 0 | 0 | 0 | 1 |
| | CSC_{M}->Motor | 0 | 0 | 0 | 1 | 1 | 0 | 0 | 0 | 0 | 0 | 1 |
| | Motor | 1 | 1 | 1 | 1 | 1 | 0 | 0 | 0 | 0 | 0 | 1 |
| | Motor->Idle | 0 | 0 | 0 | 1 | 1 | 0 | 0 | 0 | 0 | 0 | 1 |
| | Idle | 0 | 0 | 0 | 0 | 0 | 0 | 0 | 0 | 0 | 0 | 1 |
| DC-LADEN | Idle | 0 | 0 | 0 | 0 | 0 | 0 | 0 | 0 | 0 | 0 | 1 |
| | Idle->CSC_{D} | 0 | 0 | 0 | 0 | 0 | 0 | 0 | 0 | 0 | 0 | 1 |
| | CSC_{D} ->DCCh | 0 | 0 | 0 | 0 | 0 | 0 | 0 | 0 | 0 | 0 | 1 |
| | DCCh | -1 | 1 | 1 | 0 | 0 | 0 | 0 | 0 | 1 | 1 | 1 |
| | Idle | 0 | 0 | 0 | 0 | 0 | 0 | 0 | 0 | 0 | 0 | 1 |
| AC_LADEN | Idle | 0 | 0 | 0 | 0 | 0 | 0 | 0 | 0 | 0 | 0 | 1 |
| | Idle->CSC_{A} | 0 | 0 | 0 | 0 | 0 | 0 | 0 | 0 | 0 | 0 | 1 |
| | CSC_{A} ->ACCh | 0 | 0 | 0 | 0 | 0 | 0 | 0 | 0 | 0 | 0 | 1 |
| | ACCh | -1 | 1 | 1 | 0 | 0 | 1 | 1 | 1 | 0 | 0 | 1 |
| | Idle | 0 | 0 | 0 | 0 | 0 | 0 | 0 | 0 | 0 | 0 | 1 |
| ERROR | if(S4 or S3)=1) | x | x | x | 1 | 1 | x | X | X | X | X | 1 |
| | prepare Error State | 0 | 0 | 0 | 1 | 1 | 0 | 0 | 0 | 0 | 0 | 1 |
| | Init=Final Error State | 0 | 0 | 0 | 0 | 0 | 0 | 0 | 0 | 0 | 0 | 1 |
| | | | | | | | | | | | | |
| | if(S4 or S3)=0) | x | x | x | 0 | 0 | x | x | X | X | X | 1 |
| | Init=Final Error State | 0 | 0 | 0 | 0 | 0 | 0 | 0 | 0 | 0 | 0 | 1 |

**Tabelle 2: Verwendete Schütz-Typen**

| Funktion | Normally open/closed | Schütz-Nummer | Schütz-Typ |
|---|---|---|---|
| Motor-Phase U | NO | 2 | GX14NO |
| Motor-Phase V | NO | 14 | GX14NO |
| Motor-Phase W | NO | 1 | GX14NO |
| Aktiver Kurzschluss Motor-Phase U/V | NC | 4 | HXNC241 |
| Aktiver Kurzschluss Motor-Phase U/W | NC | 3 | HXNC241 |
| AC-Laden L1 -> U | NO | 5 | P115 |
| AC-Laden N -> V | NO | 9 | P115 |
| AC-Laden N -> W | NO | 10 | P115 |
| DC-Laden Minuspol | NO | 11 | P115 |
| DC-Laden Pluspol | NO | 12 | P115 |
| Sternpunkt -Schütz | NO | 13 | EVC135 |

**Tabelle 3: Schaltzeitentabelle**

| Schütz-Typ | t_on_max | t_off_max |
|---|---|---|
| P115 | 25 ms | 8 ms |
| GX14NO | 20 ms | 12 ms |
| HXNC241 | 20 ms | 20 ms |
| EVC135 (15.3 Ohm) | 25 ms | 10 ms |

### Bezugszeichenliste

- 100: Zustandsautomat zur Schützansteuerung
- 4: Übergang aufgrund Befehl
- 5: Übergang aufgrund IP core
- 6: Stabiler Zustand
- 7: Übergangszustand
- 8: Blockierter Verzögerungszustand selbstgewählter Zeitdauer
- 9: Legende
- 10: PowerOnReset
- 11: CSC_{P}: Power-Stromsensortest
- 20: Idle
- 30: ACCh: AC-Laden
- 31: CSC_{A}: AC-Stromsensortest
- 40: DCCh: DC-Laden
- 41: CSC_{D}: DC-Stromsensortest
- 50: Motor
- 51: CSC_{M}: Motor-Stromsensortest
- 52: CSC2 Motor
- 60: PError: Prepare Error State
- 61: PErrorT: Übergangszustand zum Prepare Error State
- 101: Eingangsaktion
- 111: PowerUp (or idle)
- 112: PowerUp (or idle)
- 121: PowerDown
- 123: ACCh: AC-Ladefehl
- 124: DCCh: DC-Ladebefehl
- 125: Motor
- 126: Übergang veranlasst durch IP core
- 130: Error
- 131: Error
- 132: Idle
- 133: ACCh
- 140: Error
- 141: Error
- 142: Idle
- 144: DCCh
- 150: Idle
- 151: Error
- 152: Idle
- 153: Motor
- 154: Motor
- 156: Error
- 158: Verzögerung
- 165: Error
- 168: Verzögerung
- 200: Meta-Zustandsautomat
- 201: Start
- 202: Verzweigung
- 203: Zweig DBG_CB_TEST_SINGLE_MODULE_IS_ENABLED wahr
- 204: Zweig DBG_CB_TEST_SINGLE_MODULE_IS_ENABLED unwahr
- 206: Übergangspfeil zu IDLE
- 207: Übergangspfeil zu IDLE_ERROR
- 208: Übergangspfeil zu PREPARE_SHUDOWN
- 209: Legende
- 210: PowerOnReset
- 211: CSC_P
- 219: BOOT_ERROR
- 220: IDLE
- 229: IDLE_ERROR
- 230: ACCHG
- 231: CSC_A
- 239: ACCHG_ERROR
- 241: CSC_D
- 242: DCCHG_SER
- 243: DCCHG_PAR
- 244: DCCHG_DYN
- 249: DCCHG_ERROR
- 250: MOTOR
- 251: CSC_M
- 252: CSC2 MOTOR
- 258: MOTOR_CHECK_STOP
- 259: MOTOR_ERROR
- 271: UPDATE_CB
- 272: UPDATE_CC
- 281: DBG_HSB_CMD
- 282: DBG_SINGLE_CB
- 283: DBG_PMSM
- 290: PREPARE_SHUTDOWN
- 291: SHUTDOWN
- 299: Ende
- 300: Traktionssystem
- 301: Schütz S₁
- 302: Schütz S₂
- 303: Schütz S₃
- 304: Schütz S₄
- 305: Schütz S₅
- 306: Schütz S₆
- 309: Schütz S₉
- 310: Schütz S₁₀
- 311: Schütz S₁₁
- 312: Schütz S₁₂
- 313: Schütz S₁₃
- 314: Schütz S₁₄
- 320: Steuerung
- 321: Anschluss Ansteuerung Schütze
- 322: Modulsteuerung für Multilevelkonverter
- 323: Fehlersignalleitungen
- 324: Schnittstelle zum CAN-Gateway
- 325: Signaleingang Phasenstromsensoren
- 326: Signaleingang Phasenspannungssensoren
- 328: Kontrollstromschleife Stromsensoren
- 329: Gateway
- 331: Phasenstromsensoren
- 332: Sternpunkt-Stromsensor
- 333: Phasenspannungssensoren
- 334: Spannungssensoren
- 337: Isolationswächter
- 338: Niedervoltversorgungsgleichspannungswandler
- 341: Sicherung F₁
- 342: Sicherung F₂
- 343: Sicherung F₃
- 344: Sicherung F₄
- 345: Sicherung F₅
- 346: Sicherung F₆
- 347: Sicherung F₇
- 348: Sicherung F₈
- 350: Elektromotor
- 360: Wechselstrombatterie: Modularer Multilevelkonverter
- 361: W-Modulstrang
- 362: V-Modulstrang
- 363: U-Modulstrang
- 371: Phase W
- 372: Phase V
- 373: Phase U
- 380: Externe Versorgung 48 V
- 381: DC-Laden Minuspol
- 382: DC-Laden Pluspol
- 385: AC-Laden L1-Leitung
- 387: Fahrzeugmassenanschlüsse
- 388: 12 V Bordnetzanschluss
- 389: N-Leitung
- 391: Spule
- 399: Fahrzeug CAN-Bus

## Patentansprüche

1. Verfahren zu einem Ansteuern von Schützen (301, 302, 303, 304, 305, 309, 310, 311, 312, 313, 314) in einem Traktionssystem (300), bei welchem das Traktionssystem (300) eine Wechselstrombatterie (360), einen Elektromotor (350), mindestens eine Peripherieeinheit, eine Mehrzahl an Spannungs- und Stromsensoren (331, 332, 333, 334), eine Mehrzahl an Schützen (301, 302, 303, 304, 305, 306, 309, 310, 311, 312, 313, 324), welche in elektrischen Verbindungen zu der Wechselstrombatterie (360) und zu dem Elektromotor (350) und zu der mindestens einen Peripherieeinheit angeordnet sind, und eine Steuerung (320) mit einer Hardware-programmierbaren Prozessoreinheit, auf welcher ein Steuerprogramm zum Ansteuern der Schütze (301, 302, 303, 304, 305, 309, 310, 311, 312, 313, 314) bei Betriebsbeginn konfiguriert wird und nach der Konfiguration eine das Ansteuern der Schütze (301, 302, 303, 304, 305, 309, 310, 311, 312, 313, 314) betreffende feste Halbleiter-Schaltungsstruktur der Prozessoreinheit vorliegt, umfasst, wobei das Traktionssystem (300) mehrere Betriebsmodi aufweist, wobei ein jeweiliger Betriebsmodus durch eine Fahrzeuggesamtsteuerung vorgegeben wird, wobei ein jeweiliger Betriebsmodus eine Mehrzahl an Zuständen (10, 11, 20, 30, 31, 40, 41, 50, 51, 52, 60, 61) aufweist, welche durch mindestens einen jeweiligen Zielzustand (10, 20, 30, 40, 50, 60) und mindestens einen Zwischenzustand (11, 31, 41, 51, 52, 61) gebildet wird, wobei ein jeweiliger Zustand (10, 11, 20, 30, 31, 40, 41, 50, 51, 52, 60, 61) vom Traktionssystem (300) mittels eines jeweiligen Befehles (111, 112, 121, 123, 124, 125, 126, 130, 131, 132, 133, 140, 141, 142, 144, 151, 152, 153, 154, 156, 165) durch einen jeweiligen Übergang zwischen den jeweiligen Zuständen (10, 11, 20, 30, 31, 40, 41, 50, 51, 52, 60, 61) eingenommen wird, wobei dem Traktionssystem (300) zu dem jeweiligen Zustand (10, 11, 20, 30, 31, 40, 41, 50, 51, 52, 60, 61) eine jeweilige Schaltstellung der Schütze (301, 302, 303, 304, 305, 309, 310, 311, 312, 313, 314) in einer Schalttabelle zugewiesen wird, wobei zu einem jeweiligen Schütz (301, 302, 303, 304, 305, 309, 310, 311, 312, 313, 314) eine Schließzeitdauer und eine Öffnungszeitdauer in einer Schaltzeitentabelle abgelegt werden, wobei der jeweilige Zustand (10, 11, 20, 30, 31, 40, 41, 50, 51, 52, 60, 61) durch einen fest von einem Zustandsautomaten (100) vorgegebenen Ablauf erreicht wird, wobei der Zustandsautomat (100) durch das Steuerprogramm realisiert wird, und wobei die Schütze (301, 302, 303, 304, 305, 309, 310, 311, 312, 313, 314) durch das Steuerprogramm gemäß der Schalttabelle mit Hilfe der Schaltzeitentabelle gesteuert werden.

2. Verfahren nach Anspruch 1, bei dem die Betriebsmodi mit jeweiligem Zielzustand (10, 20, 30, 40, 50, 60) und mindestens einem jeweiligen Zwischenzustand (11, 31, 41, 51, 52, 61) mindestens aus folgender Liste gewählt werden: Betriebsmodus "POWER_UP_DOWN" mit Zielzustand "Idle" (20) nach vorherigem Zwischenzustand "Power-Sensorcheck" (11), Betriebsmodus "MOTOR" mit Zielzustand "Motor" (50) nach vorherigem "Motor-Sensorcheck" (51, 52), Betriebsmodus "DC_LADEN" mit Zielzustand "DC-Laden" (40) nach vorherigem "DC-Strom-Sensorcheck" (41), Betriebsmodus "AC_LADEN" mit Zielzustand "AC-Laden" (30) nach vorherigem "AC-Strom-Sensorcheck" (31), Betriebsmodus "ERROR" mit Zielzustand "Init" nach vorherigem Zwischenzustand "Idle-Error", Betriebsmodus "SHUTDOWN" mit Zielzustand "Off" nach vorherigem Zwischenzustand "PowerDown".

3. Verfahren nach einem der voranstehenden Ansprüche, bei dem die mindestens eine Peripherieeinheit aus folgender Liste gewählt wird: Isolationswächter (337), Niedervoltgleichspannungswandler (338), Ladestecker, CAN-Bus (399).

4. Verfahren nach einem der voranstehenden Ansprüche, bei dem als Prozessoreinheit ein FPGA gewählt wird, und bei dem der Zustandsautomat (100) durch das Steuerprogramm mit Hilfe eines VHDL-Moduls auf dem FPGA als Hardware-Programm realisiert wird.

5. Verfahren nach einem der voranstehenden Ansprüche, bei dem die Hardware-programmierbare Prozessoreinheit mindestens einen zusätzlichen Mikroprozessorkern umfasst, auf dem ein dem Zustandsautomaten (100), der durch das Hardware-programmierte Steuerprogramm realisiert ist, übergeordneter Meta-Zustandsautomat (200) als Software ausgeführt wird.

6. Verfahren nach einem der voranstehenden Ansprüche, bei dem das Steuerprogramm zum Ansteuern der Schütze (301, 302, 303, 304, 305, 309, 310, 311, 312, 313, 314) zu Betriebsbeginn durch einen Programmlader auf der Hardware-programmierbaren Prozessoreinheit konfiguriert wird.

7. System zu einem Ansteuern von Schützen (301, 302, 303, 304, 305, 309, 310, 311, 312, 313, 314) in einem Traktionssystem (300), bei welchem das Traktionssystem (300) eine Wechselstrombatterie (360), einen Elektromotor (350), mindestens eine Peripherieeinheit, eine Mehrzahl an Spannungs- und Stromsensoren (331, 332, 333, 334), eine Mehrzahl an Schützen (301, 302, 303, 304, 305, 306, 309, 310, 311, 312, 313, 324), welche in elektrischen Verbindungen zu der Wechselstrombatterie (360) und zu dem Elektromotor (350) und zu der mindestens einen Peripherieeinheit angeordnet sind, und eine Steuerung (320) mit einer Hardware-programmierbaren Prozessoreinheit umfasst, wobei die Hardware-programmierbare Prozessoreinheit dazu ausgestaltet ist, ein Steuerprogramm zum Ansteuern der Schütze (301, 302, 303, 304, 305, 309, 310, 311, 312, 313, 314) bei Betriebsbeginn zu konfigurieren, wodurch nach der Konfiguration eine das Ansteuern der Schütze (301, 302, 303, 304, 305, 309, 310, 311, 312, 313, 314) betreffende feste Schaltungsstruktur der Prozessoreinheit vorliegt, wobei das Traktionssystem (300) mehrere Betriebsmodi aufweist, wobei ein jeweiliger Betriebsmodus durch eine Fahrzeuggesamtsteuerung vorgegeben ist, wobei ein jeweiliger Betriebsmodus eine Mehrzahl an Zuständen (10, 11, 20, 30, 31, 40, 41, 50, 51, 52, 60, 61) aufweist, wobei die Mehrzahl an Zuständen (10, 11, 20, 30, 31, 40, 41, 50, 51, 52, 60, 61) durch mindestens einen jeweiligen Zielzustand (10, 20, 30, 40, 50, 60) und mindestens einen Zwischenzustand (11, 31, 41, 51, 52, 61) gebildet ist, wobei ein jeweiliger Zustand (10, 11, 20, 30, 31, 40, 41, 50, 51, 52, 60, 61) der Mehrzahl an Zuständen (10, 11, 20, 30, 31, 40, 41, 50, 51, 52, 60, 61) vom Traktionssystem (300) mittels eines jeweiligen Befehles (111, 112, 121, 123, 124, 125, 126, 130, 131, 132, 133, 140, 141, 142, 144, 151, 152, 153, 154, 156, 165) durch einen jeweiligen Übergang zwischen den jeweiligen Zuständen (10, 11, 20, 30, 31, 40, 41, 50, 51, 52, 60, 61) einnehmbar ist, wobei dem Traktionssystem (300) zu dem jeweiligen Zustand (10, 11, 20, 30, 31, 40, 41, 50, 51, 52, 60, 61) eine jeweilige Schaltstellung der Schütze (301, 302, 303, 304, 305, 309, 310, 311, 312, 313, 314) in einer Schalttabelle zugewiesen ist, wobei zu einem jeweiligen Schütz (301, 302, 303, 304, 305, 309, 310, 311, 312, 313, 314) eine Schließzeitdauer und eine Öffnungszeitdauer in einer Schaltzeitentabelle abgelegt sind, wobei der jeweilige Zustand (10, 11, 20, 30, 31, 40, 41, 50, 51, 52, 60, 61) durch einen fest von einem Zustandsautomaten (100) vorgegebenen Ablauf erreichbar ist, wobei der Zustandsautomat (100) durch das Steuerprogramm realisiert ist, und wobei die Schütze (301, 302, 303, 304, 305, 309, 310, 311, 312, 313, 314) durch das Steuerprogramm gemäß der Schalttabelle mit Hilfe der Schaltzeitentabelle steuerbar sind.

8. System nach Anspruch 7, bei dem die Betriebsmodi mit jeweiligem Zielzustand (10, 20, 30, 40, 50, 60) und mindestens einem jeweiligen Zwischenzustand (11, 31, 41, 51, 52, 61) mindestens aus folgender Liste gewählt sind: Betriebsmodus "POWER_UP_DOWN" mit Zielzustand "Idle" (20) nach vorherigem Zwischenzustand "Power-Sensorcheck" (11), Betriebsmodus "MOTOR" mit Zielzustand "Motor" (50) nach vorherigem "Motor-Sensorcheck" (51, 52), Betriebsmodus "DC_LADEN" mit Zielzustand "DC-Laden" (40) nach vorherigem "DC-Strom-Sensorcheck" (41), Betriebsmodus "AC_LADEN" mit Zielzustand "AC-Laden" (30) nach vorherigem "AC-Strom-Sensorcheck" (31), Betriebsmodus "ERROR" mit Zielzustand "Init" nach vorherigem Zwischenzustand "Idle-Error", Betriebsmodus "SHUTDOWN" mit Zielzustand "Off" nach vorherigem Zwischenzustand "PowerDown".

9. System nach einem der Ansprüche 7 oder 8, bei dem die mindestens eine Peripherieeinheit aus folgender Liste entnommen ist: Isolationswächter (337), Niedervoltgleichspannungswandler (338), Ladestecker, CAN-Bus (399).

10. System nach einem der Ansprüche 7 bis 9, bei dem die Prozessoreinheit ein FPGA ist, und bei dem der Zustandsautomat (100) durch das Steuerprogramm mit Hilfe eines VHDL-Moduls auf dem FPGA als Hardware realisiert ist.

11. System nach einem der Ansprüche 7 bis 10, bei dem die Hardware-programmierbare Prozessoreinheit mindestens einen zusätzlichen Mikroprozessorkern umfasst, auf dem ein dem Zustandsautomaten (100), der durch das Hardware-programmierte Steuerprogramm realisiert ist, übergeordneter Meta-Zustandsautomat (200) als Software ausführbar ist.

12. System nach einem der Ansprüche 7 bis 11, bei dem das System zusätzlich einen Programmlader aufweist, wobei der Programmlader dazu ausgestaltet ist, das Steuerprogramm zum Ansteuern der Schütze (301, 302, 303, 304, 305, 309, 310, 311, 312, 313, 314) zu Betriebsbeginn auf der Hardware-programmierbaren Prozessoreinheit zu konfigurieren.
